# FASCICULE DE BREVET EUROPEEN

(11) **EP 2 512 822 B1**
(45) Date de publication et mention de la délivrance du brevet: **24.06.2015**
(21) Numéro de dépôt: 10809073.9
(22) Date de dépôt: 13.12.2010
(51) Int. Cl.: B42D 15/00, G03H 1/24, G03H 1/00, G03H 1/02, G03H 1/30, G03H 1/22, B42D 25/29, B42D 25/328

(54) **ELEMENT DE SECURITE COMPRENANT UNE STRUCTURE OPTIQUE**
SICHERHEITSELEMENT, UMFASSEND EIN OPTISCHE SELEMENT
SECURITY ELEMENT COMPRISING AN OPTICAL ELEMENT

(30) Priorité: 14.12.2009 FR 0906033
(43) Date de publication de la demande: 24.10.2012
(60) Demande divisionnaire: 13199652.2
(73) Titulaire: ARJOWIGGINS SECURITY, 92100 Boulogne Billancourt (FR)
(72) Inventeur: CAMUS, Michel, F-38140 Rives (FR); MALLOL, Stéphane, F-77160 Provins (FR); THIERRY, Ivan, F-77320 Jouy Sur Morin (FR); DOUBLET, Pierre, F-77160 Saint Brice (FR)
(74) Mandataire: Nony
(86) Numéro de dépôt international: PCT/IB2010/055779
(87) Numéro de publication internationale: WO 2011/073885

(56) Documents cités:
- EP-A1- 1 932 679
- EP-A2- 1 700 711
- WO-A1-92/09444

## Description

La présente invention concerne les éléments de sécurité à structure optique, telle que des structures poptiques du type holographie « standard » et/ou du type image tramée, qui sont destinés à être introduits dans ou sur des documents de sécurité.

De manière générale, une structure présentant un effet optique du type holographie « standard » reproduit un objet en relief dans les couleurs pures de l'arc-en-ciel. De telles structures sont encore appelées hologrammes standards en arc-en-ciel ou « rainbow » car elles ont la propriété de pouvoir décomposer les différentes longueurs d'onde de la lumière blanche, ce qui se traduit visuellement par un aspect coloré imitant un arc-en-ciel.

Les hologrammes standards peuvent être obtenus par un principe d'optique diffractive classique et connu en tant que tel. Par exemple, un faisceau lumineux tel qu'un laser est séparé en deux rayons lumineux par un réseau de diffraction. Les deux rayons suivent ensuite des chemins optiques différents et l'un des rayons est réfléchi par l'objet à holographier. La différence de chemin optique induit un déphasage entre les rayons qui est essentiel au processus de réalisation de l'hologramme. Enfin, la rencontre des deux rayons lumineux déphasés sur une pellicule photosensible produit des interférences qui forment l'hologramme standard et se traduisent visuellement par une représentation de l'objet en relief.

Avantageusement, l'hologramme ainsi réalisé peut constituer un système de protection très sécuritaire. En effet, sa conception requiert du matériel et une technique de haut niveau, ce qui permet de lutter contre les duplications par des méthodes d'impression traditionnelles et limite sérieusement les risques de contrefaçon. Par ailleurs, en tant qu'élément optiquement variable, l'hologramme n'est pas reproductible par photocopie couleur, il permet donc également de lutter contre ce moyen de contrefaçon.

Pour toutes ces raisons, l'utilisation des hologrammes en tant qu'éléments optiques de sécurité est dé plus en plus répandue dans le domaine des documents de sécurité. Ils sont d'ailleurs associés à différents types de supports tels que le papier, les fils de sécurité, les foils ou les bandes larges, les étiquettes ou les films de laminage. Ils peuvent également être intégrés dans différents types de documents de sécurité. Par document de sécurité, on désigne par exemple un document de valeur, un moyen de paiement, tel qu'un billet de banque, un chèque ou un ticket restaurant, un ticket de loterie, un titre de transport ou un ticket donnant accès à un événement culturel ou sportif et/ou un document pour l'identification des personnes, tel qu'une carte d'identité, un visa, un passeport ou un permis de conduire.

On comprend aisément qu'il apparaît essentiel de se prémunir contre les tentatives de falsification ou de contrefaçon dans le domaine des documents de sécurité. Il existe donc un besoin certain pour des éléments de sécurité comportant une structure optique du type holographie standard.

Toutefois, le public peut avoir des difficultés à visualiser les hologrammes standards du fait de leur aspect en arc-en-ciel. En effet pour une visualisation correcte, il est nécessaire de soumettre l'hologramme standard à un éclairage particulier ou de l'incliner de différentes manières pour l'appréhender dans son ensemble. Il découle de ces difficultés que l'authentification du document portant l'hologramme standard n'est pas directe et est source de confusion.

Les structures optiques du type image tramée, c'est-à-dire représentant un motif tramé, obtenu par exemple par démétallisation, nécessitent d'être observées avec une attention particulière pour être reconnues par le public. Associer une telle image tramée avec un élément facilement visible et reconnaissable conduira le public à un examen plus soigneux de l'image tramée, conduisant à reconnaître les imitations de contrefaçon.

Le document WO 92/09444 divulgue toutes les caractéristiques de la revendication 1, à part de la deuxième structure optique étant achromatique. Le but de l'invention est donc de proposer un élément de sécurité à structure optique du type holographie standard et/ou du type image tramée pour des documents tels que décrits ci-dessus qui permet une authentification à la fois simple, fiable et rapide du document par le public.

A cet effet, l'invention a pour objet un élément de sécurité destiné à être incorporé dans ou sur un document de sécurité, comprenant au moins une première structure optique du type holographie standard en arc-en-ciel et/ou du type image tramée représentant un premier motif et au moins une deuxième structure optique qui est achromatique et représente un deuxième motif au moins partiellement identique au premier motif.

Une structure optique achromatique, contrairement à une structure holographique standard en arc-en-ciel, ne décompose pas la lumière blanche. Elle est visible sous différentes inclinaisons et même lorsqu'elle est illuminée par une lumière de faible intensité. Son contraste et sa netteté restent tout à fait satisfaisantes sous différentes illuminations. Elle constitue donc un excellent motif de référence facilement identifiable par le public.

Une structure optique achromatique ne requiert pas d'attention particulière pour être reconnue par le public, elle est directement identifiable. Elle constitue donc également un excellent motif de référence en association avec une structure optique du type image tramée. La deuxième structure optique achromatique peut donc avantageusement être distincte d'une structure optique du type image tramée, ce qui permet de la reconnaître rapidement et simplement par rapport à la première structure optique.Une image tramée simple correspond à une image en demi-ton ou une image binaire, c'est-à-dire que les nuances de l'image sont au nombre de deux, par exemple noir et blanc, ou dans le cas d'une métallisation sélective de la surface de la structure optique, les deux nuances de l'image sont, dans une première zone, la métallisation et, dans une deuxième zone, l'absence de métallisation.

Par ailleurs, une imagé tramée plus complexe, c'est-à-dire multi-tons, peut par exemple être obtenue par un procédé de tramage par modulation de fréquence ou modulation d'amplitude. Selon ces procédés respectifs, la taille des points de trame varie en fonction de la densité optique à reproduire ou la taille des points de trame est constante mais l'écartement varie en fonction de la densité optique à reproduire.

La résolution de l'image tramée peut être comprise entre 200 et 2500 dpi.

L'image tramée peut comporter un ensemble de points et/ou de lignes parallèles ou non, dont la taille et/ou l'espacement entre eux sont variables ou constants, cet ensemble formant une succession de zones claires et sombres, par exemple blanches et noires. Les points de trame peuvent avoir une forme circulaire, et peuvent tous avoir les mêmes dimensions ou des dimensions variables entre eux. L'utilisation très avantageuse d'une structure optique achromatique, et en particulier l'association selon l'invention d'un même motif représenté d'une part en holographie standard arc-en-ciel et/ou en image tramée et d'autre part en optique achromatique, permet au public, par une observation simultanée, de comparer les deux représentations, d'identifier le motif et donc d'authentifier le document de sécurité.

Par ailleurs, chacune des structures optiques apporte son propre niveau de sécurité ce qui rend la falsification du document encore plus difficile et permet de mieux lutter contre les actes de contrefaçon.

Selon un mode de réalisation particulier de l'invention, la première structure comporte une structure du type holographie standard en arc-en-ciel qui est une structure diffractive optiquement variable.

Selon un mode de réalisation particulier de l'invention, ladite première structure optique comporte une image tramée qui comprend une pluralité de points représentant ledit premier motif, par exemple en trois dimensions. De préférence, les points de la structure du type image tramée sont obtenus par perforation, dépôt et/ou vides de matériau. Par exemple, les points de l'image tramée sont obtenus par une métallisation ou une démétallisation de matériaux sélectionnés parmi : des métaux, des composés métalliques, des alliages, des vernis ou encres métalliques, telle que cela est décrit dans le document EP 0 279 880. Alternativement, les points de la structure du type image tramée peuvent être obtenus par une impression sélective, en positif ou négatif, d'une encre contenant des pigments choisis parmi : des pigments de noir de carbone, des pigments magnétiques, des pigments colorés, des pigments visibles sous un rayonnement UV ou IR ou un mélange de ces derniers. Les points de l'image tramée peuvent avoir des formes et/ou des dimensions variables et être distribués également de manière variable de sorte à former un motif multi-tons.

On peut également tramer de manière différente plusieurs régions de l'image et en particulier, lorsqu'on utilise des points de trame constitués par des lignes, on peut reproduire certaines parties de l'image avec des lignes ayant une inclinaison donnée et d'autres parties de l'image avec des lignes ayant une inclinaison différente. On peut donc avoir, au sein de la même image tramée, plusieurs régions, par exemple trois ou quatre, dont les points de trame sont constitués par des lignes ayant des orientations différentes.

Selon un autre mode de réalisation particulier de l'invention, la deuxième structure optique est une structure achromatique reproduisant le deuxième motif en trois dimensions.

Selon un mode de réalisation particulier de l'invention, la première et la deuxième structure sont disposées sur l'élément de sécurité de manière adjacente ou séparées d'une distance inférieure à sept centimètres de sorte à être observables simultanément et à pourvoir être comparées.

La première structure optique et la deuxième structure optique peuvent avoir au moins une partie de leur contour qui est identique. En particulier, le premier et le deuxième motif peuvent avoir au moins une partie de leur contour qui est identique.

L'élément de sécurité selon l'invention peut en outre comprendre les particularités suivantes :
- au moins une couche de vernis de protection sur l'une de ses faces,
- au moins une couche d'adhésif thermo-fusible ou scellable à froid ou un auto-adhésif.

L'invention s'étend à un support de sécurité constitué de matériaux fibreux naturels, par exemple de cellulose et/ou de coton, et/ou de fibres synthétiques, comprenant au moins un élément de sécurité.

Dans le support de sécurité selon l'invention, l'élément de sécurité peut se présenter sous la forme d'un fil qui est au moins partiellement intégré dans le support avec les première et deuxième structures optiques au moins partiellement visibles. Dans ce cas, l'élément de sécurité est de préférence sensiblement transparent ou translucide dans les zones recouvertes par le support de manière à ce que les motifs soient visibles en lumière transmise. Alternativement, l'élément de sécurité peut se présenter sous la forme d'une bande ou d'un patch appliqué sur une surface du support. Par exemple, une telle bande de sécurité présente une largeur comprise entre 6 et 20 mm.

L'invention s'étend encore à un document de sécurité tel qu'un passeport, une carte d'identité, un permis de conduire, une carte à jouer ou à collectionner interactive, un moyen de paiement, notamment une carte de paiement, un bon d'achat ou un « voucher », une carte de transport, une carte de fidélité, une carte de prestation ou une carte d'abonnement, incluant un élément de sécurité qui comprend au moins une première structure optique du type holographie standard en arc-en-ciel et/ou du type image tramée représentant un premier motif et au moins une deuxième structure optique qui est achromatique et représente un deuxième motif au moins partiellement identique au premier motif.

Des exemples de réalisation d'éléments de sécurité selon l'invention sont décrits plus en détail ci-après et illustrés par les figures. Cette description n'est donnée qu'à titre d'exemple indicatif et nullement limitatif de l'invention.

La figure 1 illustre un élément de sécurité selon un premier mode de réalisation de l'invention, vu en coupe transversale.

La figure 2 illustre un document équipé de l'élément de sécurité montré sur la figure 1.

La figure 3 illustre un document équipé d'un élément de sécurité selon un deuxième mode de réalisation de l'invention.

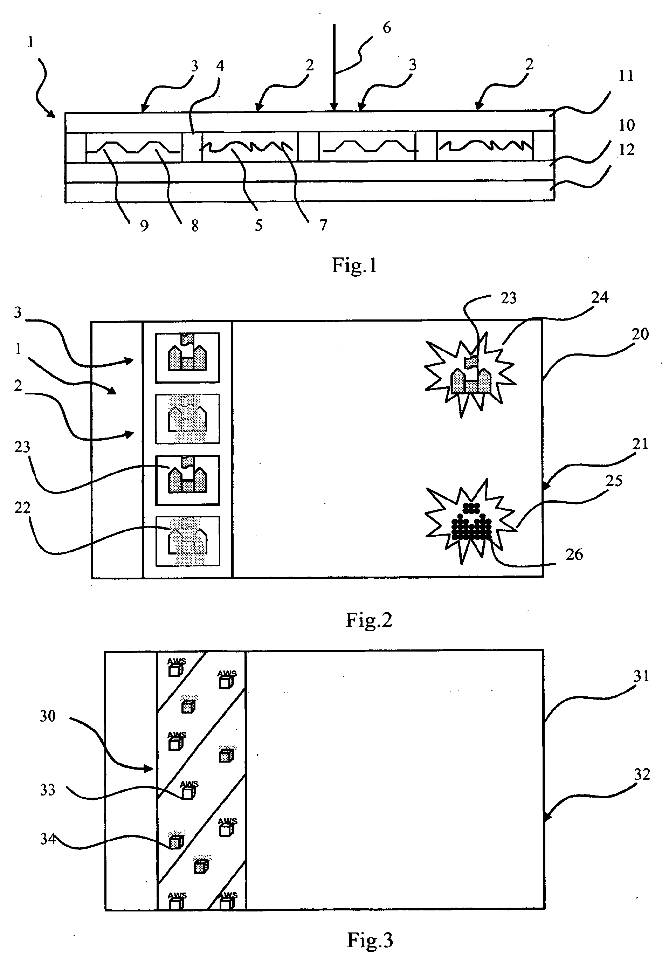

Sur la figure 1, on montre un élément de sécurité I destiné à être incorporé dans ou sur un document de sécurité.

Dans l'exemple de réalisation de la figure 1, l'élément de sécurité 1 est une bande de forme allongée, connue sous le nom de « foil de sécurité » dans le domaine des documents de sécurité. Sa largeur est de préférence comprise entre 6 et 20 mm et son épaisseur est de préférence d'environ 5 microns.

En particulier, l'élément de sécurité 1 comprend une alternance de premières structures optiques 2 du type holographie standard en arc-en-ciel et de deuxièmes structures optiques 3 qui sont achromatiques. Les structures optiques 2 et 3 sont disposées dans le même plan, sur la même face de l'élément de sécurité 1, à proximité l'une de l'autre le long de l'élément de sécurité 1 avec un espace 4 qui sépare une première structure optique du type holographie standard en arc-en-ciel 2 d'une structure optique achromatique 3.

La structure optique 2 du type holographie standard en arc-en-ciel est, par exemple, obtenue par embossage au laser ou au moyen d'un faisceau d'électrons, ou par micro estampage d'une couche plastique 5 telle que du polyester, PVC, acétate, polyéthylène, entre autres. La structure optique 2 présente ainsi des micro-reliefs correspondant au réseau diffractif de l'hologramme du type arc-en-ciel. Alternativement, les micros reliefs sont obtenus par estampage à chaud d'une couche thermoplastique ou encore par micro gravure. Cette structure optique 2 subit ensuite un traitement de surface de manière à former une couche métallique 7 épousant les micro-reliefs. Par exemple, la couche métallique 7 est réfléchissante et obtenue par vaporisation d'aluminium sur la couche plastique 5. D'autres matériaux peuvent être choisis parmi la liste suivante : le cuivre, l'étain, le chrome, l'argent, l'or, le nickel ou des alliages appropriés, tels que l'acier inoxydable, des encres métalliques ou encore des oxydes métalliques.

Il peut également être prévu que la couche métallique soit appliquée de manière partielle ou sélective selon les zones de sorte à former des motifs complémentaires ou une autre structure optique du type image tramée. Il est également envisagé d'obtenir ces motifs complémentaires par tout autre procédé de démétallisation. Les motifs complémentaires peuvent être des signes, des caractères alphanumériques, des symboles, entre autres.

La structure optique 2 constitue un dispositif optiquement variable qui se présente sous la forme d'un hologramme avec un effet visuel du type arc-en-ciel.

La structure optique achromatique 3 est par exemple obtenue à partir d'une pièce en étain qui est gravée de manière à ce quelle reproduise les reliefs correspondants du motif que l'on souhaite représenter. En ce sens, elle est considérée comme un hologramme en relief de type achromatique.

Alternativement, une image du motif peut être désaturée par un procédé informatique et une reconstruction en trois dimensions (3D) est effectuée à partir de cette image désaturée. Par « désaturer », on entend enlever de la couleur à l'image. En particulier, l'image peut être totalement désaturée, c'est-à-dire être en niveaux de gris.

Une autre méthode consiste à réaliser une acquisition en 3D d'un volume représentant le motif, à subdiviser le motif en tranches équidistantes dans le plan du motif, à supprimer les portions de tranches qui présentent une épaisseur constante pour obtenir une plaque mince à la manière d'une lentille de Fresnel. Par exemple, un procédé de gravure nanométrique par faisceau d'électrons permet ensuite de reproduire le motif sur un support. Cette méthode est particulièrement adaptée pour obtenir une structure optique achromatique reproduisant un motif en trois dimensions tout en étant sensiblement plate.

Encore, une autre méthode pour réaliser une structure optique achromatique est décrite dans le document US 2005/0270604. Cette méthode se base sur la superposition de couches holographiques du type arc-en-ciel pour réaliser un effet achromatique.

Le relief reproduisant le motif en 3D obtenu par un des procédés ci-dessous est de préférence formé dans une couche plastique 8 telle que du polyester, PVC, acétate, polyéthylène, entre autres. Alternativement, le relief est obtenu par estampage à chaud d'une couche thermo-plastique. La couche 8 subit ensuite un traitement de surface pour former une couche métallique 9 épousant le relief.

Tout type de procédé adapté pour l'obtention d'une structure optique achromatique reproduisant le motif en 3D peut être utilisé sans s'éloigner du cadre de l'invention.

Il est également prévu selon l'invention que la couche métallique 7 des structures optiques 2 du type holographie standard et la couche métallique 9 des structures optiques achromatiques 3 sont chacune réalisées à partir d'un matériau métallique différent. Par exemple, la couche métallique 7 est constituée d'un film métallique à base d'aluminium et la couche métallique 9 est constituée d'un film métallique à basé de cuivre, de sorte que les deux métaux présentent des couleurs différentes. Cet agencement a pour effet de renforcer la distinction entre les deux structures optiques 2 et 3 pour en faciliter la comparaison et donc l'authentification du document. En outre, l'utilisation de matériaux métalliques différents sur un même élément de sécurité rend la falsification du document encore plus difficile.

Les structures optiques 2 et 3 peuvent ensuite subir un autre traitement de surface de sorte à former par exemple une première 10 et une deuxième 11 couche de vernis de protection de chaque coté de la bande. Ainsi, les deux faces des structures optiques 2 et 3 se trouvent prises en sandwich et protégées entre les couches 10 et 11, notamment contre l'abrasion, mais aussi contre l'électroformage.

Par ailleurs, une couche d'adhésif 12, par exempte thermofusible, est enduite sur la face de l'élément de sécurité 1 qui est destinée à venir en contact avec le document de sécurité. On comprend que le relief obtenu pour chaque structure optique doit être visible sur la face opposée de l'élément de sécurité 1, c'est-à-dire dans le sens indiqué par la flèche 6.

Une couche de support relativement rigide et amovible peut également équiper l'élément de sécurité 1 de sorte que l'élément de sécurité ne soit pas endommagé lors du transport et jusqu'à son intégration dans le document de sécurité.

Dans l'élément de sécurité 1 décrit ci-dessus, la distance entre deux structures optiques adjacentes 2 et 3 est de préférence inférieure à 7 cm pour que ces deux structures soient observables simultanément. La structure optique 2 du type holographie standard en arc-en-ciel peut être adjacente à la structure optique achromatique 3, ou sensiblement adjacente, c'est-à-dire disposée à proximité avec un espace réduit 4 les séparant, comme illustré sur les figures 1 et 2. Les structures optiques peuvent également être disposées sur l'élément de sécurité en bande 1 selon une répartition particulière, comme illustré sur la figure 3.

En conséquence, avec l'agencement selon l'invention, un observateur regardant vers l'élément de sécurité 1, dans le sens indiqué par la flèche 6, voit donc simultanément une première structure optique arc-en-ciel 2 et une structure optique achromatique 3 dont il peut comparer les motifs sous des angles et des éclairages différents. Cette comparaison visuelle rend évidente l'authentification du document.

Sur la figure 2, on montre l'élément de sécurité 1 tel que décrit en référence à la figure 1, qui est disposé de manière classique sur un support 20 au moyen de la couche d'adhésif 12 pour constituer le document de sécurité 21. Par exemple, l'élément de sécurité 1 est appliqué transversalement sur le support 20 par une presse à chaud ou par un transfert par laminage.

Comme illustré sur la figure 2, les motifs 22 et 23 formés respectivement par la première 2 et la deuxième structure optique 3 sont au moins partiellement semblables et de préférence identiques. On entend par «partiellement semblable» ou «partiellement identique », le fait que deux motifs incluent des parties, des traits ou des formes reconnaissables, identiques ou similaires qui suffisent au public pour associer les deux motifs. Dans l'exemple illustré sur la figure 2, hormis l'aspect visuel arc-en-ciel et achromatique, l'observateur constate que les motifs 22 et 23 sont identiques. Dans l'exemple, ils représentent un château, mais tout autre motif aisément reconnaissable par le public peut être représenté sans s'éloigner de la présente invention. Par exemple, le visage d'une personne célèbre, un monument connu, ou tout autre motif peut être prévu.

Sur la figure 2, on montre également le document de sécurité 21 équipé de deux patchs 24 et 25 disposés dans des coins du document 21. Dans l'exemple de réalisation de la figure 2, le patch 24 porte une structure optique du type hologramme en arc-en-ciel représentant le motif 23 identique au motif 22 de la structure optique 2 du type holographie standard en arc-en-ciel.

Le patch 25 porte une structure optique du type image tramée 26 telle que définie ci-dessus. Comme illustré, l'image tramée 26 comprend une pluralité de points représentant le premier motif 22 de manière reconnaissable pour le public. De préférence, les points de la structure du type image tramée sont obtenus par perforation, dépôt et/ou vides de matériau, par exemple par une métallisation ou une démétallisation.

Selon l'invention, le support 20 du document 21 comporte des zones translucides ou transparentes au moins localisées au niveau la structure optique de type image tramée 26 de sorte que dans le cas d'une image obtenue par démétallisation par exemple, le motif correspondant est visible en lumière transmise. Dans ce cas, la structure optique de type image tramée 26 est visible lors d'une observation en lumière transmise alors que les structures optiques du type holographie en arc-en-ciel et achromatiques sont visibles en lumière réfléchie, ce qui rend la falsification du document encore plus difficile. Par ailleurs, l'image tramée peut représenter un motif en trois dimensions lorsqu'elle est vue en lumière transmise. Un tel élément de sécurité avec une structure optique de type image tramée est décrit dans le document EP 1 674 286.

Selon l'invention, les patchs 24 et 25 sont disposés à proximité l'un de l'autre, de préférence à une distance inférieure à sept centimètres, de sorte qu'un observateur voit simultanément les deux patchs 24 et 25 dont il peut comparer les motifs sous des angles et des éclairages différents pour authentifier le document.

Il est entendu que l'on ne s'éloignerait pas de l'invention en équipant le document de sécurité 21 d'un élément de sécurité 1 en bande comprenant une alternance de premières structures optiques du type image tramée et de deuxièmes structures optiques qui sont achromatiques ou une alternance de structures optiques du type hologramme en arc-en-ciel, de structures optiques du type image tramée et de structures optiques qui sont achromatiques.

Alternativement, les patchs peuvent eux-mêmes porter chacun une structure optique du type hologramme en arc-en-ciel et une structure optique achromatique représentant le même motif et/ou une structure optique du type image tramée et une structure optique achromatique.

Sur la figure 3, on a représenté un élément de sécurité 30 se présentant également sous la forme d'une bande allongée. Cet élément de sécurité 30 est aussi fixé à un support de sécurité 31 pour constituer un document de sécurité 32.

L'élément de sécurité 30 comprend des premières structures optiques 33 du type hologramme en arc-en-ciel et des secondes structures optiques achromatiques 34 qui sont disposées sur l'élément de sécurité avec une alternance à la fois longitudinale mais aussi transversale. Comme illustré sur la figure 3, chaque structure optique arc-en ciel 33 est juxtaposée à une structure optique achromatique 34 et cela dans les deux directions du plan défini par l'élément de sécurité 30.

Dans cet exemple de réalisation, le motif représenté par les structures optiques 33 et 34 est un cube en 3D au-dessus duquel est placée l'inscription AWS obtenue en positif, en négatif ou par démétallisation.

Dans les deux modes de réalisation décrits en référence aux figures 2 et 3, l'élément de sécurité peut être transféré sur le support en formant une surépaisseur ou au moyen de la méthode décrite dans le document WO 2009/022072. Ce document décrit la fabrication d'un support papier à partir de deux jets fibreux en formation dans des formes rondes et destinés à être disposés l'un sur l'autre. L'un des jets fibreux comprend une zone allongée d'épaisseur nulle destinée à accueillir le ruban de sécurité sans générer de surépaisseur.

Selon l'invention, l'élément de sécurité 30 peut également inclure des structures optiques du type image tramée tel que définie ci-avant, qui représentent le même motif que les structures optiques achromatiques 34.

Alternativement aux deux modes de réalisation précédents, l'élément de sécurité selon l'invention peut se présenter sous la forme d'un ruban fin couramment appelé « fil de sécurité », dont la largeur ne dépasse généralement pas les 4 mm et dont l'épaisseur est d'environ 20-30 microns. Ce fil de sécurité, généralement en matière plastique, comprend, en plus des structures optiques arc-en ciel et du type image tramée et achromatique, des éléments de sécurité, par exemple luminescents. En outre, le fil de sécurité est introduit au moins partiellement en masse dans le support du document de sécurité, et une partie seulement apparaît visible, par exemple, à travers une pluralité de fenêtres formées dans la masse fibreuse en formation telles que décrites dans le document EP 0 059 056. La partie visible laisse apparaître les structures optiques arc-en ciel et achromatique représentant le même motif.

Dans un mode de réalisation particulier de l'invention, le support de sécurité portant l'élément de sécurité est constitué de matériaux fibreux naturels, par exemple de la cellulose et/ou du coton, et/ou des fibres synthétiques. Le support de sécurité peut aussi être réalisé à partir de matériaux plastiques, comme par exemple un film Polyart^{™} vendu par la société ARJOBEX Ltd.

Le document de sécurité incluant le support et l'élément de sécurité peut être un document tel qu'un passeport, une carte d'identité, un permis de conduire, une carte à jouer ou à collectionner interactive, un moyen de paiement, notamment une carte de paiement, un bon d'achat ou un voucher, une carte de transport, une carte de fidélité, une carte de prestation ou une carte d'abonnement.

Un document de sécurité ainsi obtenu comporte donc au moins un élément de sécurité tel que décrit ci-avant qui constitue un élément de sécurité dit « de premier niveau ». Il peut toutefois comporter d'autres éléments de sécurité « de premier niveau » et/ou au moins un élément de sécurité dit « de deuxième niveau » et/ou « de troisième niveau ».

Le document peut en particulier comporter les éléments de sécurité suivants seuls ou en combinaison :
- des colorants et/ou des pigments luminescents et/ou des pigments interférentiels et/ou des pigments à cristaux liquides, notamment sous forme imprimée ou mélangés à au moins une couche constitutive du document,
- des composants, .colorants et/ou des pigments photochromes ou thermochromes, notamment sous forme imprimée ou mélangées à au moins à au moins une couche constitutive du document,
- un absorbeur ultraviolet (UV), notamment sous forme enduite ou mélangé à au moins une couche constitutive du document,
- un matériau spécifique collecteur de lumière, par exemple du type « guide d'ondes », par exemple un matériau collecteur de lumière luminescent comme les films polymères à base de polycarbonate commercialisés par la société BAYER sous la dénomination LISA^{®},
- un film multicouche interférentiel,
- une structure à effet optique variable à base de pigments interférentiels ou de cristaux liquides,
- une couche biréfringente ou polarisante,
- une structure dé diffraction,
- une image embossée,
- des moyens produisant un "effet de moiré", un tel effet pouvant par exemple faire apparaître un motif produit par la superposition de deux éléments de sécurité sur le document, par exemple par le rapprochement de lignes de deux éléments de sécurité,
- un élément réfractif partiellement réfléchissant,
- une grille lenticulaire transparente,
- une lentille, par exemple une loupe,
- un filtre coloré,
- un autre foil métallisé, goniochromatique ou holographique,
- une couche à effet optique variable à base de pigments interférentiels ou de cristaux liquides,
- un élément de sécurité plat et de format relativement petit tel qu'une planchette, visible ou non visible, notamment luminescent, avec ou sans dispositif électronique,
- des particules ou agglomérats de particules de pigments ou colorants de type HI-LITE, visibles ou non visibles, notamment luminescents,
- des fibres de sécurité, notamment métalliques, magnétiques (à magnétisme doux et/ou dur), ou absorbantes, ou excitables aux ultraviolets, le visible ou l'infrarouge, et en particulier le proche infrarouge (NIR),
- une sécurité lisible automatiquement ayant des caractéristiques spécifiques et mesurables de luminescence (par exemple fluorescence, phosphorescence), d'absorption de la lumière (par exemple ultraviolet, visible ou infrarouge), d'activité Raman, de magnétisme, d'interaction micro-ondes, d'interaction aux rayons X ou de conductivité électrique.

Un ou plusieurs éléments de sécurité tels que définis plus haut peuvent être présents dans le document et/ou dans une ou plusieurs couches constitutives du document ou dans un ou plusieurs éléments de sécurité incorporés au document et/ou à une ou plusieurs couches constitutives du document, comme par exemple un fil, une fibre ou une planchette.

L'une au moins des couches constitutives du document peut aussi comporter un élément de sécurité de premier niveau tel qu'un filigrane ou un pseudo-filigrane se superposant au moins partiellement à une région translucide du document.

## Revendications

1. Elément de sécurité (1 ; 30) destiné à être incorporé dans ou sur un document de sécurité (21 ; 32), comprenant :
- au moins une première structure optique (2) du type image tramée représentant un premier motif (22),
- au moins une deuxième structure optique (3) qui est achromatique et représente un deuxième motif (23) au moins partiellement identique au premier motif (22).

2. Elément de sécurité selon la revendication 1, dans lequel l'image tramée de ladite première structure optique (2) comprend une pluralité de points représentant ledit premier motif (22).

3. Elément de sécurité selon l'une des revendications précédentes, dans lequel la première structure optique (2) comporte une image tramée dont les points sont obtenus par perforation, dépôt et/ou vides de matériaux, notamment sélectionnés parmi : des métaux, des composés métalliques, des alliages, des vernis ou encres métalliques.

4. Elément de sécurité selon l'une quelconque des revendications précédentes, dans lequel la deuxième structure optique (3) est une structure achromatique reproduisant le deuxième motif (23) en trois dimensions.

5. Elément de sécurité selon l'une quelconque des revendications précédentes, dans lequel la première (2) et la deuxième structure optiques (3) sont disposées sur l'élément de sécurité (1 ; 30) de manière adjacente de sorte à être observables simultanément et à pouvoir être comparées.

6. Elément de sécurité selon l'une quelconque des revendications 1 à 4, dans lequel la première (2) et la deuxième structure optique (3) sont disposées sur l'élément de sécurité (1 ; 30) et séparées d'une distance inférieure à sept centimètres de sorte à être observables simultanément et à pouvoir être comparées.

7. Elément de sécurité selon l'une quelconque des revendications précédentes, dans lequel ladite au moins une première structure optique (2) comprend une première couche réfléchissante (7) et ladite au moins une deuxième structure optique (3) comprend une deuxième couche réfléchissante (9), les couches réfléchissantes (7, 9) étant constituées de matériaux différents.

8. Elément de sécurité selon l'une quelconque des revendications précédentes, ladite au moins une deuxième structure optique (3) achromatique étant distincte d'une structure optique du type image tramée.

9. Support de sécurité (20; 31) constitué de matériaux fibreux naturels, notamment de la cellulose et/ou du coton, et/ou de fibres synthétiques, **caractérisé en ce qu'**il comprend au moins un élément de sécurité (1 ; 30) selon l'une des revendications précédentes.

10. Support de sécurité selon la revendication 9, dans lequel l'élément de sécurité (1 ; 30) se présente sous la forme d'un fil qui est au moins partiellement intégré dans le support de sécurité avec les première (2) et deuxième (3) structures optiques au moins partiellement visibles.

11. Support de sécurité selon la revendication 9, dans lequel l'élément de sécurité (1 ; 30) se présente sous la forme d'une bande ou d'un patch appliqué sur une surface du support.

12. Support de sécurité selon la revendication 9, dans lequel l'élément de sécurité (1 ; 30) est sous la forme d'une bande et présente une largeur comprise entre 6 et 20 mm.

13. Document de sécurité (21 ; 32) tel qu'un passeport, une carte d'identité, un permis de conduire, une carte à jouer ou à collectionner interactive, un moyen de paiement, notamment une carte de paiement, un bon d'achat ou un voucher, une carte de transport, une carte de fidélité, une carte de prestation ou une carte d'abonnement, incluant un élément de sécurité selon l'une quelconque des revendications 1 à 8 ou un support de sécurité selon l'une quelconque des revendications 9 à 12.

## Patentansprüche

1. Sicherheitselement (1; 30), das dazu ausgelegt ist, in oder auf einem Sicherheitsdokument (21; 32) angebracht zu werden, mit
- wenigstens einer ersten optischen Struktur (2) vom Rasterbildtyp, die ein erstes Motiv (22) darstellt,
- wenigstens einer zweiten optischen Struktur (3), die achromatisch ist und ein zweites Motiv (23) darstellt, das wenigstens teilweise mit dem ersten Motiv (22) identisch ist.

2. Sicherheitselement nach Anspruch 1, in dem das Rasterbild der ersten optischen Struktur (2) mehrere Punkte aufweist, die das erste Motiv (22) darstellen.

3. Sicherheitselement nach Anspruch, in dem die erste optische Struktur (2) ein Rasterbild aufweist, dessen Punkte erhalten sind durch Perforation, Aufbringung und/oder Leerstellen von Material, insbesondere ausgewählt unter Metallen, metallischen Zusammensetzungen, Legierungen, Lacken oder metallischen Tinten.

4. Sicherheitselement nach Anspruch 1 und optional nach einem der Ansprüche 2 und 3, in dem die zweite optische Struktur (3) eine achromatische Struktur ist, die das zweite Motiv (23) in drei Dimensionen wiedergibt.

5. Sicherheitselement nach einem der vorstehenden Ansprüche, in dem die erste (2) und die zweite optische Struktur (3) nebeneinander auf dem Sicherheitselement (1; 30) angeordnet sind, so dass sie gleichzeitig beobachtbar sind und miteinander verglichen werden können.

6. Sicherheitselement nach einem der Ansprüche 1 bis 4, in dem die erste (2) und die zweite optische Struktur (3) auf dem Sicherheitselement (1; 30) angeordnet und in einem Abstand von weniger als sieben Zentimeter voneinander entfernt sind, so dass sie gleichzeitig beobachtbar sind und miteinander verglichen werden können.

7. Sicherheitselement nach einem der vorstehenden Ansprüche, in dem die wenigstens eine erste optische Struktur (2) eine erste Reflexionsschicht (7) aufweist und die wenigstens eine zweite optische Struktur (3) eine zweite Reflexionsschicht (9) aufweist, wobei die Reflexionsschichten (7, 9) aus verschiedenen Materialien bestehen.

8. Sicherheitselement nach einem der vorstehenden Ansprüche, wobei die wenigstens eine zweite achromatische optische Struktur (3) von der optischen Struktur vom Rasterbildtyp verschieden ist.

9. Sicherheitsträger (20; 31) der aus natürlichen Fasermaterialien, insbesondere Zellstoff und/oder Baumwolle und/oder Synthetikfasern, besteht, **dadurch gekennzeichnet, dass** er wenigstens ein Sicherheitselement (1; 30) nach einem der vorstehenden Ansprüche aufweist.

10. Sicherheitsträger nach Anspruch 9, in dem das Sicherheitselement (1; 30) in Form eines Drahts vorhanden ist, der wenigstens teilweise so in den Sicherheitsträger integriert ist, dass die erste (2) und die zweite optische Struktur (3) wenigstens teilweise sichtbar sind.

11. Sicherheitsträger nach Anspruch 9, in dem das Sicherheitselement (1; 30) in Form eines Streifens oder Aufklebers vorhanden ist, der auf einer Oberfläche des Trägers aufgebracht ist.

12. Sicherheitsträger nach Anspruch 9, in dem das Sicherheitselement (1; 30) die Form eines Streifens hat, dessen Breite zwischen 6 und 20 mm beträgt.

13. Sicherheitsdokument (21; 32), wie beispielsweise ein Pass, eine Ausweiskarte, ein Führerschein, eine Karte zum Spielen oder interaktivem Sammeln, ein Zahlungsmittel, insbesondere ein Kartenzahlungsmittel, ein Einkaufsgutschein oder ein Voucher, eine Fahrkarte, eine Kundentreuekarte, eine Dienstleistungskarte oder eine Abonnentenkarte, mit einem Sicherheitselement nach einem der Ansprüche 1 bis 8 oder einem Sicherheitsträger nach einem der Ansprüche 9 bis 12.

## Claims

1. A security element (1; 30) intended to be incorporated in or on a security document (21; 32), comprising :
- at least one first optical structure (2) of the raster image type representing a first pattern (22),
- at least one second optical structure (3) which is achromatic and represents a second pattern (23) at least partially identical to the first pattern (22).

2. The security element as claimed in claim 1, in which the raster image of said first optical structure (2) comprises a plurality of points representing said first pattern (22).

3. The security element as claimed in one of the preceding claims, in which the first optical structure (2) comprises a raster image, the points of which are obtained by perforation, deposition and/or voids of materials, selected in particular from: metals, metal compounds, alloys, metal varnishes or metal inks.

4. The security element as claimed in claim 1 and possibly in any one of claims 2 and 3, in which the second optical structure (3) is an achromatic structure reproducing the second pattern (23) in three dimensions.

5. The security element as claimed in any one of the preceding claims, in which the first (2) and the second optical structures (3) are positioned on the security element (1; 30) in an adjacent fashion so as to be observable simultaneously and to be able to be compared.

6. The security element as claimed in any one of claims 1 to 4, in which the first (2) and the second optical structures (3) are positioned on the security element (1; 30) and are separated by a distance of less than seven centimeters so as to be observable simultaneously and to be able to be compared.

7. The security element as claimed in any one of the preceding claims, in which said at least one first optical structure (2) comprises a first reflecting layer (7) and said at least one second optical structure (3) comprises a second reflecting layer (9), the reflecting layers (7, 9) being composed of different materials.

8. The security element as claimed in any one of the preceding claims, said at least one second achromatic optical structure (3) being distinct from an optical structure of the raster image type.

9. A security support (20; 31) composed of natural fibrous materials, in particular cellulose and/or cotton, and/or of synthetic fibers, **characterized in that** it comprises at least one security element (1; 30) as claimed in one of the preceding claims.

10. The security support as claimed in claim 9, in which the security element (1; 30) exists in the form of a thread which is at least partially incorporated in the security support with the at least partially visible first (2) and second (3) optical structures.

11. The security support as claimed in claim 9, in which the security element (1; 30) exists in the form of a strip or of a patch applied to a surface of the support.

12. The security support as claimed in claim 9, in which the security element (1; 30) is in the form of a strip and exhibits a width of between 6 and 20 mm.

13. A security document (21; 32), such as a passport, an identity card, a driving license, an interactive trading card, a means of payment, in particular a credit card, a voucher, a travel pass, a loyalty card, a provision card or a season ticket, including a security element as claimed in any one of claims 1 to 8 or a security support as claimed in any one of claims 9 to 12.
